# EUROPÄISCHE PATENTANMELDUNG

(11) **EP 2 058 109 A2**
(43) Veröffentlichungstag der Anmeldung: **13.05.2009**
(21) Anmeldenummer: 08168569.5
(22) Anmeldetag: 07.11.2008
(51) Int. Cl.: B29C 65/08

(54) **Ultraschallschweißeinrichtung**

(30) Priorität: 09.11.2007 DE 102007053853
(71) Anmelder: Weber Ultrasonics GmbH, 76307 Karlsbad-Ittersbach (DE)
(72) Erfinder: Weber, Dieter, 76307 Karlsbad (DE)
(74) Vertreter: Rüger, Barthelt & Abel Patentanwälte

(57) **Zusammenfassung**

Eine Ultraschallschweißeinrichtung weist eine Schweißstation mit einem zu öffnenden und zu schließenden Schweißspalt auf, in den ein Werkstück eingelegt wird. Der Schweißstrom wird eingeschaltet, nachdem der Schweißspalt geschlossen ist. Um ein Anschwingen der Sonotrode zu erreichen, wird die Sonotrode zunächst zu einer kleineren Schwingamplitude veranlasst. Nach dem Anschwingen der Sonotrode wird auf die volle Schweißleistung allmählich erhöht.

## Beschreibung

Beim Ultraschallschweißen wird das Werkstück zwischen einer Sonotrode und einem Amboss eingelegt. Sodann werden die Sonotrode und der Amboss aufeinander zu gefahren, damit die Sonotrode mechanisch gut an das Werkstück angekoppelt ist. Die Ultraschallschwingungen der Sonotrode können so in das Werkstück eingeleitet werden, um es im Spalt zwischen Sonotrode und Amboss bis auf den Schmelzpunkt zu erwärmen.

Durch das Anpressen der Sonotrode an das Werkstück verändert sich die Bedämpfung der als Resonator aufgefassten Sonotrode und damit ihrer aus der Sicht des Ultraschallgenerators sichtbare Impedanz. Bei hoher Anpresskraft liegt eine starke Bedämpfung vor, während die nicht angepresste Sonotrode dazu führt, dass an den Eingängen des Ultraschallwandlers eine geringe Bedämpfung zu sehen ist. Das Ersatzschaltbild zeigt dann einen kleinen Wirkwiderstand. Dieser erfordert bei gegebenem Eingangstrom am Ultraschallwandler eine entsprechend hohe Ausgangsspannung am Genarator.

Schließlich ändert sich die Bedämpfung in Abhängigkeit von der Erweichung des zu verschweißenden Materials.

Wegen der Abhängigkeit der an dem Ultraschallwandler sichtbaren Impedanz von der Bedämpfung wird die Schweißleistung, d.h. die mechanische Energie die die Sonotrode an das Werkstück abgibt, geregelt indem die Frequenz verstellt wird mit der der Ultraschallwandler betrieben wird.

Es hat sich gezeigt, dass es schwierig ist, einen ungestörten Startbetrieb der Sonotrode zu erreichen, wenn die Sonotrode erst eingeschaltet wird, nachdem sie an das Werkstück angepresst ist, weil möglicherweise der Generator überfordert wird und auf Störung geht. Die Sonotrode erfordert zum Anschwingen unter diesen Bedingungen eine höhere Generatorleistung als die Maximalleistung im späteren Schweißbetrieb.

Ausgehend hiervon ist es Aufgabe der Erfindung eine Schweißeinrichtung zu schaffen, bei der die Einheit aus Generator und Sonotrode auch mit einem Ultraschallgenerator zu schwingen zu bringen ist, der hinsichtlich seiner Ausgangsleistung lediglich für den Schweißbetrieb mit Nennleistung ausgelegt ist.

Diese Aufgabe wird erfindungsgemäß mit der Schweißeinrichtung mit den Merkmalen des Anspruches 1 gelöst.

Bei der neuen Schweißeinrichtung ist ein in der Frequenz verstellbarer Ultraschallgenerator vorgesehen, der in der Betriebsfrequenz steuerbar ist und der wenigstens zwei Ausgangsanschlüsse aufweist, an denen die elektrische Energie abgegeben wird. An dem Ultraschallgenerator ist ein Ultraschallwandler angeschlossen, der die empfangene elektrische Energie in mechanische Schwingungsenergie umsetzt. Die Ausgangsseite des Ultraschallgenerators kann mit einem Booster verbunden sein, der als Transformator wirkt und der eine Eingangs- und eine Ausgangsseite für die Ultraschallenergie aufweist. An der Eingangsseite sitzt der Ultraschallgenerator, während die Ausgangsseite mit der Sonotrode verbunden ist. Die Sonotrode kann auch unmittelbar an den Ultraschallwandler angeschlossen sein.

Ferner ist eine Programmsteuerung für den Ultraschallgenerator vorgesehen, die den Ultraschallgenerator hinsichtlich der für die Erfindung wesentlichen Betriebs- und Ausgangsparameter ein bestimmtes Programm abarbeiten lässt.

Wie Eingangs erwähnt, zeigt das Arbeiten mit Ultraschallschweißeinrichtungen das Phänomen, dass die Sonotrode keine Schweißwirkung zeigt, wenn die Sonotrode auf das Werkstück aufgepresst ist und der Ultraschallgenerator an die Sonotrode ein elektrisches Signal abgibt, entsprechend der Nennschwingamplitude an der Arbeitsfläche.

Gemäß der Erfindung wird deswegen in einem ersten Zeitintervall der Ultraschallgenerator schnell bis zu einem Wert hochgefahren, bei der eine Schwingungsamplitude an der Arbeitsfläche entsteht, die ein Bruchteil der Schwingungsamplitude beim eigentlichen Schweißen ist. Im Anschluss daran wird der Ultraschallgenerator weiter hoch gefahren, jedoch mit einer geringeren Geschwindigkeit, die so gewählt ist, dass keine Überlastung des Ultraschallgenerators auftritt.

Vor dem ersten Zeitintervall ist der Ultraschallgenerator abgeschaltet. Die Sonotrode kommt im nichtschwingenden Zustand mit dem Werkstück in Berührung. Nachdem die Sonotrode angepresst ist, arbeitet der Ultraschallgenerator mit der Startfrequenz, was zu einem kleineren Ausgangsstrom am Generator führt. Dies verhindert, dass von dem Generator eine Ausgangsleistung abgefordert wird, die er nicht zu liefern in der Lage wäre.
Nachdem die Sonotrode mit der Startfrequenz entsprechend dem kleineren Schweißstrom angesprungen ist, wird durch die Programmsteuerung in das zweite Zeitintervall umgeschaltet. In dem zweiten Zeitintervall läuft der Ultraschallgenerator mit einer Frequenz oder einer Amplitude des Ausgangswechselstroms, der der gewünschten Nennschweißleistung entspricht.

Gemäß einer alternativen Ausführungsform wird der Ultraschallgenerator insgesamt langsam hochgefahren, so dass er genügend lange in jenem Zeitbereich bleibt, in dem die Sonotrode ohne Überlastung des Generators anschwingen kann.

Der Ultraschallwandler ist zweckmäßigerweise ein Piezoschallwandler.

Um das Werkstück wirksam einspannen zu können ist der Sonotrode ein Amboss zugeordnet.

Um den Arbeitsspalt zwischen Sonotrode und Amboss einstellen zu können, ist entweder dem Amboss oder der Einheit aus Ultraschallwandler, Booster und Sonotrode eine Antriebseinrichtung zugeordnet, mit der der Amboss und die genannte Einheit gegeneinander bewegbar sind.

Die Antriebseinrichtung ist zweckmäßigerweise kraftbetrieben.

Der Antriebseinrichtung kann eine Positionserkennung zugeordnet sein, um eine Rückmeldung zu erhalten, wann das Werkstück eingespannt ist.

Die Dauer des zweiten Zeitintervalls kann zwischen 100 msek und 1 sek liegen.

Günstige energetische Verhältnisse ergeben sich, wenn vor dem ersten Zeitintervall der Ultraschallgenerator abgeschaltet ist, in dem Sinne, dass er keine elektrische Energie an den Ultraschallwandler abgibt. Hierdurch wird elektrische Energie gespart und der Ultraschallwandler setzt keine Wärme um.

Die Parameter am Beginn des zweiten Zeitintervalls können kann so gewählt sein, dass die an der Sonotrode auftretende Schwingamplitude zwischen 20% und 90%, vorzugsweise zwischen 30% und 80%, höchst vorzugsweise zwischen 40% und 60% der Nennschwingamplitude liegt, mit dem er die Sonotrode im normalen Schweißbetrieb schwingt.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Figuren entnehmen, die insoweit die Figurenbeschreibung ergänzen. Es ist klar, dass eine Reihe von Abwandlungen möglich sind.

Die nachfolgenden Figuren sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Dies gilt insbesondere für das Blockschaltbild.
In der Zeichnung ist ein Ausführungsbeispiel des Gegenstandes der Erfindung dargestellt.
- Fig. 1: zeigt in einer stark schematisierten Darstellung eine Ultraschallschweißeinrichtung.
- Fig. 2: veranschaulicht den Impedanzverlauf an den Eingangsklemmen des Ultraschallwandlers
- Fig. 3: zeigt in einem schematisierten Diagramm den Verlauf der Frequenz mit der der Ultraschallwandler angesteuert wird.
- Fig. 4: zeigt in einem schematisierten Diagramm den Verlauf der Wechselstromamplitude mit der der Ultraschallwandler angesteuert wird.

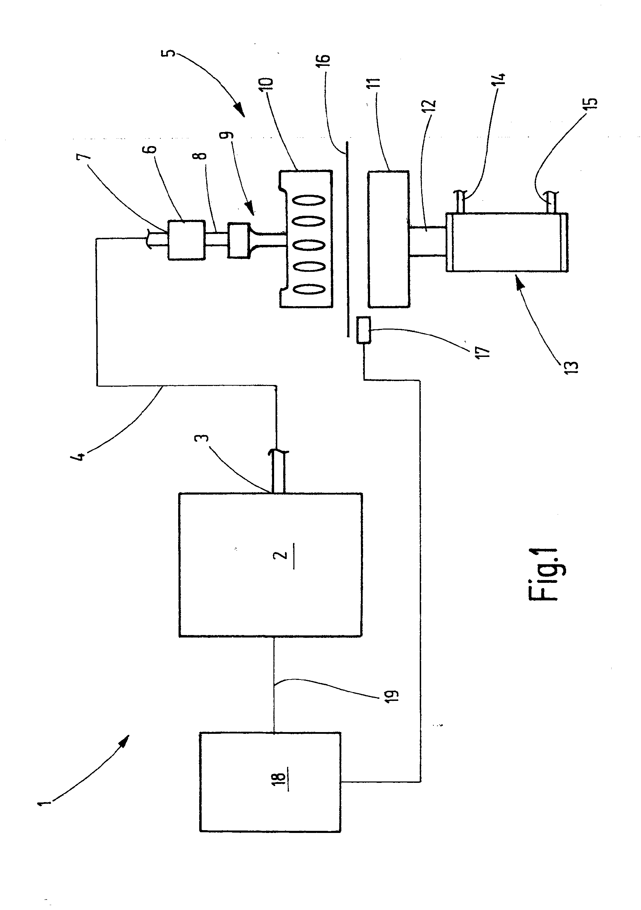

Fig. 1 zeigt eine Ultraschallschweißeinrichtung 1 in stark schematisierter Darstellung. Zu der Ultraschallschweißeinrichtung 1 gehört ein Ultraschallgenerator 2, an dessen Ausgang 3 über eine Leitung 4 eine Schweißstation 5 angeschlossen ist. Die Schweißstation umfasst einen Ultrachallwandler 6. Der elektrische Eingang des Ultraschallwandlers 6 ist bei 7 angedeutet.

Der Ultraschallwandler 5 dient dazu elektrische Energie in mechanische Schwingungen umzusetzen, die er bei 8 an einen Booster 9 abgibt. Der Booster 9 ist ausgangsseitig mit einer schematisch gezeigten Sonotrode 10 verbunden.

Zu der Ultraschallschweißstation 5 gehört ferner ein Amboss 11, der unterhalb der Sonotrode 10 dieser gegenüberliegend angeordnet ist. Der Amboss 11 ist beweglich und ist mit einer Kolbenstange 12 eines Druckluftzylinders 13 verbunden. Mit Hilfe des Druckluftzylinders 13, dem über Anschlüsse 14 bzw. 15 Druckluft zuführbar ist, kann der Amboss 11 angehoben oder abgesenkt werden. Zwischen dem Amboss 11 und der Sonotrode 10 besteht ein Spalt, durch den ein zu verschweißendes Werkstück 16 hindurch bewegbar ist.

Die Maßnahmen, die erforderlich sind um das Werkstück 16 zu bewegen sind nicht dargestellt.

Lediglich wegen der Vereinfachung der Darstellung ist in der Figur die Antriebseinrichtung in Gestalt des Druckluftzylinders 13 mit dem Amboss 11 verbunden, und nicht, wie bei Schweißmaschinen üblich, mit der Einheit aus Ultraschallwandler 6, Booster 9 und Sonotrode 10. Für die Erläuterung der Erfindung ist es gleichgültig, ob zum Öffnen und Schließen des Schweißspalts die Sonotrode 10 oder der Amboss 11 bewegt werden. Wegen der besseren Übersichtlichkeit wurde der Amboss 11 als beweglich gezeigt.

Ferner gibt es einen Positionsmelder 17, mit dem erfasst wird, ob der Schweißspalt geschlossen, d.h. die Sonotrode 10 und der Amboss 11 und der Zwischenlage des Werkstücks 16 zusammengedrückt sind, oder ob sie, wie gezeigt, in einem deutlichen Abstand voneinander stehen. Der Positionsgeber 17 ist mit einer Programmsteuerung 18 verbunden, deren Ausgang über eine Leitung 19 mit dem Ultraschallgenerator 2 verbunden ist. Über die Leitung 19 steuert die Programmsteuerung 18 die Frequenzvorgabe für den Ultraschallgenerator 2.

Die bekannten Ultraschallschweißmaschinen enthalten zusätzlich einen weiteren, hier in der Zeichnung nicht gezeigten Regelkreis, dessen Zweck darin besteht, den Strom, der in den Ultraschallwandler 6 fliest, konstant zu halten, um so eine konstante Schweißleistung im Schweißspalt zu erzeugen. Die Stromregelung geschieht mittelbar über eine Variation der Frequenz der Speisespannung, die der Ultraschallgenerator 2 an den Ultraschallwandler 6 abgibt.

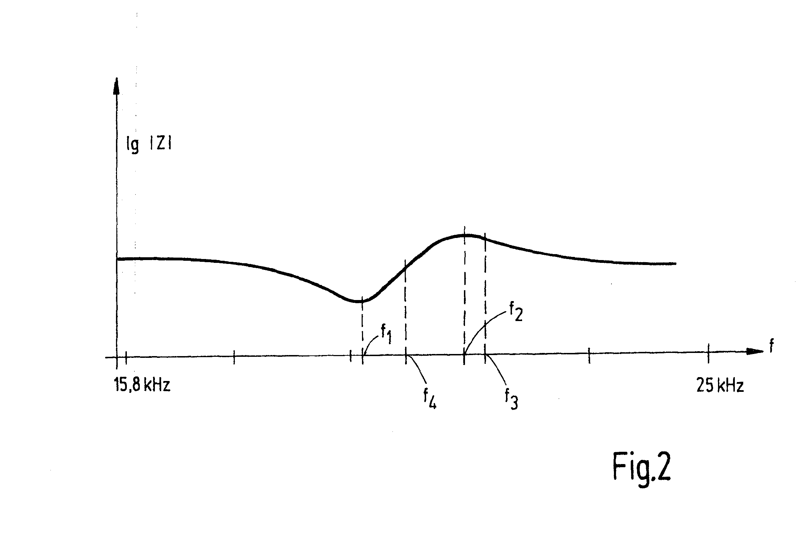

Fig. 2 veranschaulicht schematisiert den typischen Impedanzverlauf über der Frequenz im Bereich um den Arbeitsbereich der mechanischen Teile der Utraschallschweißsttion 5. Aufgetragen ist die Impedanz Z in einem logarithmischen Maßstab über der Frequenzachse, die durch die Abszisse gebildet ist.

Der hier dargestellte Frequenzbereich beginnt bei 15,8 kHz und endet unterhalb von 25 kHz. Andere Arbeitsbereiche sind ebenfalls üblich.

Wie zu erkennen ist, verringert sich die Impedanz an dem Eingangsanschluss 7 des Ultraschallwandlers 6, ausgehend von einer Frequenz von 15,8 kHz bis zu einer Frequenz f₁ von ca. 19.000 kHz, wo sie ein Minimum erreicht. Oberhalb der Serienresonanzfrequenz der Anordnung steigt die Impedanz wieder an und erreicht bei f₂ mit ca. 22.000 Hz ein Maximum, um ausgehend davon wieder sanft abzufallen. Das Maximum hat seine Ursache in einer Parallelresonanz. Im Minimum ist der Imaginärteil der Impedanz minimal, während der Realteil im wesentlichen nur durch die Bedämpfung der Sontrode 10 bestimmt wird.

Die Kurve ist vereinfacht und zeigt den Impedanzverlauf, wenn die Sonotrode 10 unter Zwischenlage des Werkstücks 16 gegen den Amboss 11 angepresst ist. Im freien Zustand wäre die Resonanzüberhöhung wesentlich größer und außerdem würden die Extrema an anderen Stellen liegen.

Die Kurve berücksichtigt nicht im echten Betrieb weiter zu erkennende Maxima und Minima aufgrund von Partialresonanzen, die jenseits des rechten Maximums bei 21.000 Hz liegen.

Der normale Schweißarbeitsbereich des Ultraschallwandlers 6 mit angeschlossener Sonotrode 10 liegt in dem Bereich zwischen den beiden Extrema.

Es hat sich nun herausgestellt, dass der Generator 2 leistungsmäßig überfordert wird, wenn er die Sonotrode 10 auf der normalen Arbeitsfrequenz zum Anschwingen bringen soll. Der Generator 2 kann den Strom nicht liefern, weil der Realteil der Impedanz so groß ist, dass eine Eingangsspnnung am Ultraschallwandler 6 nötig wäre, die der Generator 2 nicht liefern kann. Das System würde einen vermeindlichen Fehler erkennen.

Die Erfinder haben herausgefunden, dass eine Überlastung des Generators 2 vermieden werden kann, wenn unmittelbar nach dem Einspannen des Werkstücks 16 und Einschalten des Generators 2 zunächst die Sonotrode 10 mit einer höheren Frequenz entsprechend einem geringeren Strom betrieben wird. Die in der Schweißeinrichtung vorhandene Programmsteuerung 18 arbeitet nun in der folgenden Weise:

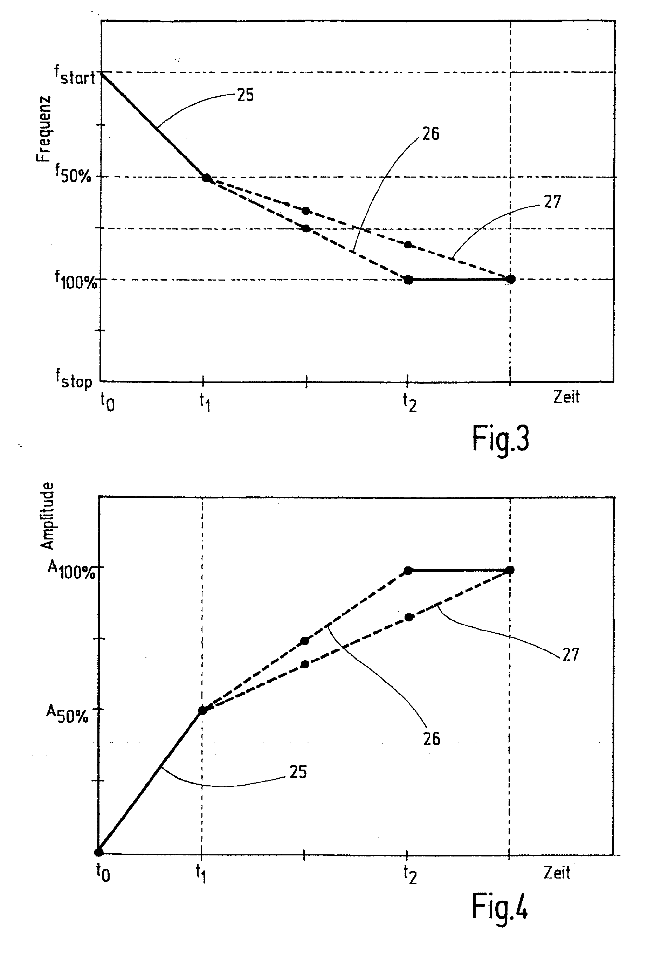

In den Figuren 3 und 4 sind nunmehr Diagramme enthalten, die veranschaulichen, wie erfindungsgemäß das Schweißsystem betrieben wird. Bis zum Zeitpunkt t0 ist der Ultraschallgenerator 2 abgeschaltet. Er liefert an seinem Ausgang bis zum Zeitpunkt t0 kein elektrisches Signal. Zum Zeitpunkt t0 ist der Schweißspalt zugefahren und es wird der Ultraschallgenerator 2 mit einer Startfrequenz eingeschaltet, die, bezogen auf Fig. 2, rechts von dem Maximum liegt. Dieser Frequenzpunkt liegt im Bereich der Parallelresonanz, die das Ersatzschaltbild zeigt.

Entsprechend dem Einschwingverhalten, der in dem Ultraschallgenerator 2 enthaltenen Regelung, wird die Frequenz so schnell wie möglich auf einen Wert f_{50%} erniedrigt. Diese Frequenz entspricht bei dem gewählten Ausführungsbeispiel etwa der halben Schwingamplitude an der Arbeitsfläche, wie dies das Diagramm gemäß Fig. 4 erkennen lässt. Diese Betriebssituation ist zum Zeitpunkt t1 erreicht. Der Frequenzverlauf ist durch eine Gerade 25 versinnbildlicht.

An den Zeitpunkt t1 schließt sich das zweite Zeitintervall an. In diesem zweiten Zeitintervall wird nunmehr die Frequenz des Ultraschallgenerators 2 mit einer deutlich flacheren Steilheit gemäß der Kurve 26 bis auf den Nennwert f_{100%} weiter abgesenkt. Bei dem weiteren Absenken mit der geringeren Steilheit steigt die Schwingamplitude an der Arbeitsflächen der Sonotrode 10 langsamer an als bis zu dem Zeitpunkt t1 gemäß der Kurve 25. Dadurch wird verhindert, dass die Sonotrode 10 mehr Leistung abgeben soll als der Generator 2 zu liefern vermag. Zum Zeitpunkt t2 hat die Schwingamplitude der Arbeitsfläche der Sonotrode 10 den Nennwert erreicht. Ab diesem Zeitpunkt t2 arbeitet die Anlage in der bekannten Weise weiter um das Werkstück zu verschweißen. Durch die Regelung in dem Generator 2 wird die Schwingamplitude auf ihrem Sollwert für den Schweißvorgang gehalten. Die eigentliche Schweißphase ist in den Diagrammen nicht mehr enthalten. Der Generator 2 wird nach einer Zeitspanne, die der gewünschten Schweißzeit entspricht und die sich an t2 anschließt, abgeschaltet. Der Schweißspalt wird geöffnet und das Werkstück entnommen.

Wie die Figuren erkennen lassen, sind durchaus unterschiedliche Zeitrampen z.B. auch die Kurve 27 möglich. Welche davon jeweils günstig ist ergibt sich aus den technischen Gegebenheiten, wie der Gestalt der Sonotrode, der Größe der Fläche, dem Material für das Werkstück 16 und dergleichen mehr. Die passenden Werte können leicht empirisch ermittelt werden. Wesentlich ist, dass der Ultraschallwandler 6 nicht in einen Leistungsbereich kommt, in dem er den Generator überfordert, der in seiner Leistung auf den Leistungsbedarf beim Schweißen im eingeschwungenen Zustand ausgelegt ist.

Die Kurven 26 oder 27 können auch in kleinen, in der Anzahl wählbaren Stufen angenähert sein.

Eine Ultraschallschweißeinrichtung weist eine Schweißstation mit einem zu öffnenden und zu schließenden Schweißspalt auf, in den ein Werkstück eingelegt wird. Der Schweißstrom wird eingeschaltet, nachdem der Schweißspalt geschlossen ist. Um ein Anschwingen der Sonotrode zu erreichen, wird die Sonotrode zunächst zu einer kleineren Schwingamplitude veranlasst. Nach dem Anschwingen der Sonotrode wird auf die volle Schweißleistung allmählich erhöht.

## Patentansprüche

1. Ultraschallschweißeinrichtung (1)
mit einem Ultraschallgenerator (2), der in der Betriebsfrequenz und/oder dem Ausgangsstrom steuerbar ist und der wenigstens zwei Ausgangsanschlüsse (3) aufweist,
mit einem Ultraschallwandler (6) zum Umwandeln von elektrischer Energie in mechanische Energie, der an den Ausgang des Ultraschallgenerators (2) angeschlossen ist,
mit einer Sonotrode (10), die an die Ausgangsseite () des Ultraschallwandlers (6) angekoppelt ist, und
mit einer Programmsteuerung (18) für den Ultraschallgenerator (2), die derart arbeitet, dass der Ultraschallgenerator (1) in einem ersten Zeitintervall (t0-t1) schnell in einen Arbeitsbereich gelangt, in dem die Arbeitsfläche der Sonotrode (10) mit einem Bruchteil ihrer Nennschwingamplitude zum Schwingen kommt, und dass in einem zweiten Zeitintervall (t1), das sich an das erste Zeitintervall (t0-t1) anschließt, der Ultraschallgenerator (2) langsamer als im ersten Zeitintervall (t0-t1) weiter hochgefahren wird, in dem Sinne, dass die Sonotrode (10) mit einer zunehmend größeren Schwingamplitude bis hin zu der Nennschwingamplitude arbeitet, wobei die Anstiegsgeschwindigkeit derart gewählt ist, dass die Arbeitsfläche der Sonotrode (10) bei angepresstem Werkstück (16) ohne Überlastung des Ultraschallgenerators (2) im Schwingzustand verbleibt, und der Bruchteil derart gewählt ist, dass die die Arbeitsfläche der Sonotrode (10) bei angepresstem Werkstück ohne Überlastung des Ultraschallgenerators (2) in den Schwingzustand kommt.

2. Ultraschallschweißeinrichtung (1)
mit einem Ultraschallgenerator (2), der in der Betriebsfrequenz und/oder dem Ausgangsstrom steuerbar ist und der wenigstens zwei Ausgangsanschlüsse (3) aufweist,
mit einem Ultraschallwandler (6) zum Umwandeln von elektrischer Energie in mechanische Energie, der an den Ausgang des Ultraschallgenerators (2) angeschlossen ist,
mit einer Sonotrode (10), die an die Ausgangsseite () des Ultraschallwandlers (6) angekoppelt ist, und
mit einer Programmsteuerung (18) für den Ultraschallgenerator (2), die derart arbeitet, dass der Ultraschallgenerator (2) ausgehend von der nicht schwingenden Sonotrode (10) derart langsam bis hin zu der Nennschwingamplitude hochgefahren wird, dass die Sonotrode (10) bei angepresstem Werkstück (16) ohne Überlastung des Ultraschallgenerators (2) anschwingt und im Schwingzustand bleibt.

3. Ultraschallschweißeinrichtung nach Anspruch 1 oder 2, **dadurch gekennzeichnet, dass** das Hochfahren in einer Erhöhung der Amplitude des Wechselstroms liegt, den der Ultraschallgenerator (2) in den Ultraschallwandler (6) liefert.

4. Ultraschallschweißeinrichtung nach Anspruch 1 oder 2, **dadurch gekennzeichnet, dass** das Hochfahren in einer Erniedrigung oder Erhöhung der Frequenz des Wechselstroms liegt, den der Ultraschallgenerator (2) an seinem Ausgang (3) liefert, im Sinne einer Annäherung Schwingamplitude an die Nennschwingamplitude an der Arbeitsfläche.

5. Ultraschallschweißeinrichtung nach Anspruch 1 oder 2, **dadurch gekennzeichnet, dass** der Ultraschallwandler (6) ein Piezoschallwandler () ist.

6. Ultraschallschweißeinrichtung nach Anspruch 1 oder 2, **dadurch gekennzeichnet, dass** der Sonotrode (10) ein Amboss (11) zugeordnet ist.

7. Ultraschallschweißeinrichtung nach Anspruch 1 oder 2, **dadurch gekennzeichnet, dass** dem Amboss (11) oder der Einheit aus Ultraschallwandler (6) und Sonotrode (10) eine Antriebseinrichtung (13) zugeordnet ist derart, dass die Sonotrode (10) und der Amboss (11) aufeinander zu und voneinander weg bewegbar sind.

8. Ultraschallschweißeinrichtung nach Anspruch 7, **dadurch gekennzeichnet, dass** die Antriebseinrichtung (13) kraftbetrieben ist.

9. Ultraschallschweißeinrichtung nach Anspruch 7, **dadurch gekennzeichnet, dass** der Antriebseinrichtung (13) eine Postionserkennungseinrichtung (17) zugeordnet ist.

10. Ultraschallschweißeinrichtung nach Anspruch 1 oder 2, **dadurch gekennzeichnet, dass** das erste Zeitintervall (t0-t1) zwischen 1 msek und 500 msek lang ist.

11. Ultraschallschweißeinrichtung nach Anspruch 1 oder 2, **dadurch gekennzeichnet, dass** das zweite Zeitintervall (t1-t2), in der die Sonotrode (10) von der Anschwingamplitude auf die Nennschwinganmplitude hochgefahren wird, zwischen 10 msec und 1 sec lang ist.

12. Ultraschallschweißeinrichtung nach Anspruch 1 oder 2, **dadurch gekennzeichnet, dass** vor dem ersten Zeitintervall (t0-t1) der Ultrallschallgenerator (2) abgeschaltet ist in dem Sinne, dass er keine elektrische Energie an den Ultraschallwandler (6) abgibt.

13. Ultraschallschweißeinrichtung nach Anspruch 1 oder 2, **dadurch gekennzeichnet, dass** die Ausgangsparameter des Ultraschallgenerators (2) so gewählt sind, dass die Schwingamplitude der Sonotrode (10) zu Beginn des zweiten Zeitintervalls (t1-t2) zwischen 20% und 90%, vorzugsweise 30% und 80%, höchst vorzugsweise zwischen 40% und 60% der Maximalamplitude liegt, mit der die Sonotrode (10) im normalen Schweißbetrieb beaufschlagt ist.

14. Ultraschallschweißeinrichtung nach Anspruch 1 oder 2, **dadurch gekennzeichnet, dass** sie einen Booster (9) aufweist, der zwischen dem Ultraschallwandler (6) und der Sonotrode (10) liegt.
